# EUROPÄISCHE PATENTANMELDUNG

(11) **EP 1 341 143 A2**
(43) Veröffentlichungstag der Anmeldung: **03.09.2003**
(21) Anmeldenummer: 02005479.7
(22) Anmeldetag: 09.03.2002
(51) Int. Cl.: G09F 21/04, B32B 7/12

(54) **Folienförmiger Werbeträger**

(30) Priorität: 01.03.2002 DE 10209140
(71) Anmelder: Huber, Richard, 88400 Biberach (DE); Bischofsberger, Matthias, 88400 Biberach (DE)
(72) Erfinder: Huber, Richard, 88400 Biberach (DE); Bischofsberger, Matthias, 88400 Biberach (DE)
(74) Vertreter: Kiessling, Christian

(57) **Zusammenfassung**

Bei einer Folien-Vorrichtung mit einer Folie mit mindestens einer einseitigen Haftungsbeschichtung sowie Informationsträgerschicht wird dadurch, dass die Folie einen geschlossenen ersten Folienteil sowie mindestens einen im Abstand angeordnete Aussparungen enthaltenden weiteren Folienteil aufweist, erreicht, dass unter mindestens teilweiser Einbeziehung von Fensterflächen bei Kraftfahrzeugen größere Flächen als mit den herkömmlichen Folien abgedeckt werden können.

## Beschreibung

Die Erfindung betrifft Folien-Vorrichtung mit einer Folie mit mindestens einer einseitigen Haftungsbeschichtung sowie Informations-trägerschicht.

Folien-Vorrichtungen der eingangs genannten Art werden im Stand der Technik verwendet, um die Oberfläche beliebiger, in der Regel jedoch planer Körper und Objekte zu gestalten. Die bekannten Folien-Vorrichtungen weisen dabei den Nachteil auf, dass sie insbesondere auf modernen Verkehrsmitteln wie Bussen, Lastkraftwagen und Eisenbahnwagons nur auf kleinen zur Verfügung stehenden Flächen anbringbar sind, da sie aufgrund ihrer Lichtundurchlässigkeit nicht auch mindestens teilweise eine Fensterfläche eines entsprechenden Fahrzeuges abdecken sollen.

Aufgabe der Erfindung ist es deshalb, eine Folien-Vorrichtung zu schaffen, die so beschaffen ist, dass unter mindestens teilweiser Einbeziehung von Fensterflächen bei Kraftfahrzeugen größere Flächen als mit den herkömmlichen Folien abgedeckt werden können.

Für eine Folien-Vorrichtung der eingangs genannten Art wird diese Aufgabe dadurch gelöst, dass die Folie einen geschlossenen ersten Folienteil sowie mindestens einen im Abstand angeordnete Aussparungen enthaltenden weiteren Folienteil aufweist.

Bevorzugte Ausführungsformen der Erfindung sind Gegenstand der Unteransprüche.

Bei der erfindungsgemäßen Folien-Vorrichtung wird durch das Merkmal, dass die Folie einen geschlossenen ersten Folienteil sowie mindestens einen im Abstand angeordnete Aussparungen enthaltenden weiteren Folienteil aufweist, erreicht, dass eine Vorrichtung geschaffen ist, die Folienteile bzw. Folienflächenanteile mit unterschiedlicher Lichtdurchlässigkeit ausweist, wobei die besonders stabilen und festen, da geschlossenen Folienteile eine zu gestaltende Grundfläche abdecken und die mit Aussparungen perforierten Folienteile teilweise die Fenster eines Kraftfahrzeuges oder einfach Fahrzeuges abdecken, ohne dabei die Sicht eines Fahrers von innen nach außen zu obstruieren, so dass insgesamt eine größer als die Grundfläche bemessenen Fläche von der Folie abdeckbar und gestaltbar ist.

Gemäß einer wichtigen bevorzugten Ausführungsform der erfindungsgemäßen Vorrichtung ist vorgesehen, dass der erste und der mindestens eine weitere Flächenteil integral miteinander verbunden sind. Dadurch ist eine gewünschte besondere mechanische Stabilität der Folie sichergestellt.

Die Aussparungen des mindestens einen weiteren Flächenteils sind dabei vorzugsweise jeweils kreisförmig ausgebildet, wobei die Aussparungen vorzugsweise jeweils gleiche Durchmesser aufweisen und dieser Durchmesser insbesondere auf etwa 1 mm bemessen ist, da sich dieser Wert in der Praxis insofern bewährt hat, da er eine gute Sicht durch ein Fenster eines Kraftfahrzeuges von innen nach außen sicherstellt. Ein Abstand der Aussparungen von jeweils etwa 2 mm bis 3 mm hat sich dabei insbesondere bewährt.

Alternativ können die Aussparungen des mindestens einen weiteren Flächenteils auch paarweise unterschiedliche Durchmesser aufweisen, um einer Interferenzmusterbildung vorzubeugen, oder sie können in einer oder mehr Richtungen in immer enger werdendem Abstand oder mit ansteigend größerem Durchmesser versehen sein, um die Transparenz der Folie für das menschliche Auge richtungsabhängig vorzugeben.

Bei all diesen Ausführungsformen ist die Haftungsbeschichtung des mindestens einen weiteren Flächenteils schwarz ausgebildet oder transparent ausgebildet und auf einem schwarzen Hintergrund aufgetragen, um eine gute Sicht von einem dunklen Raum in eine vergleichsweise hellere Umgebung zu bewirken, wie dies bei Sicht aus einem Fahrzeug ins Freie der Fall ist.

Die Informationsschicht des ersten Flächenteils und/oder des mindestens einen weiteren Flächenteils kann gemäß unterschiedlicher Alternativen ausgebildet und bedruckt sein. Gemäß einer ersten Ausführungsform ist sie mindestens teilweise als freistehende Fläche ausgebildet, und gemäß einer anderen Ausführungsform ist sie mindestens teilweise mittels Digitaldruck bedruckt. Außerdem kann die Informationsschicht des ersten Flächenteils und/oder des mindestens einen weiteren Flächenteils der Folie auch mindestens teilweise mittels Siebdruck bedruckt sein.

Die Folie ist auf der der Haftungsbeschichtung fernen Seite vorzugsweise von einem Laminat abgedeckt, um ihre Oberfläche zu schützen.

Die mindestens eine einseitige Haftungsbeschichtung ist vorzugsweise als Klebeschicht ausgebildet ist. Alternativ kann sie auch als Magnetträgerschicht oder als Adhäsionsschicht ausgebildet sein.

Gemäß einer weiteren wichtigen bevorzugten Ausführungsform der erfindungsgemäßen Vorrichtung ist vorgesehen, dass die Folie auf der der Klebebeschichtung fernen Seite mit einem dreidimensionalen Motiv bedruckt ist. Dabei ist der mindestens eine weitere Flächenteil vorzugsweise mit dem Bild eines dreidimensionalen Körpers bedruckt, der teilweise in das dreidimensionale Motiv des ersten Flächenteils integriert ist. Der Körper kann dabei insbesondere von einer einfachen geometrischen Figur wie einem Ball, einem Kegel, einem Würfel, einem Zylinder, oder auch einer Flasche oder einem Hut gebildet sein.

Die erfindungsgemäße Vorrichtung wird im folgenden anhand einer bevorzugten Ausführungsform erläutert, die in der Figur der Zeichnung dargestellt ist. Darin zeigt:
- Fig. 1: eine bevorzugte Ausführungsform der erfindungsgemäßen Vorrichtung in einer Ansicht von vorne;
- Fig. 2: Die in Figur 1 dargestellte bevorzugte Ausführungsform der erfindungsgemäßen Vorrichtung in einer Ansicht von hinten;
- Fig. 3: einen im Abstand angeordnete Aussparungen enthaltenden weiteren Folienteil der in den Figuren 1 und 2 dargestellten bevorzugte Ausführungsform der erfindungsgemäßen Vorrichtung in einer Draufsicht.

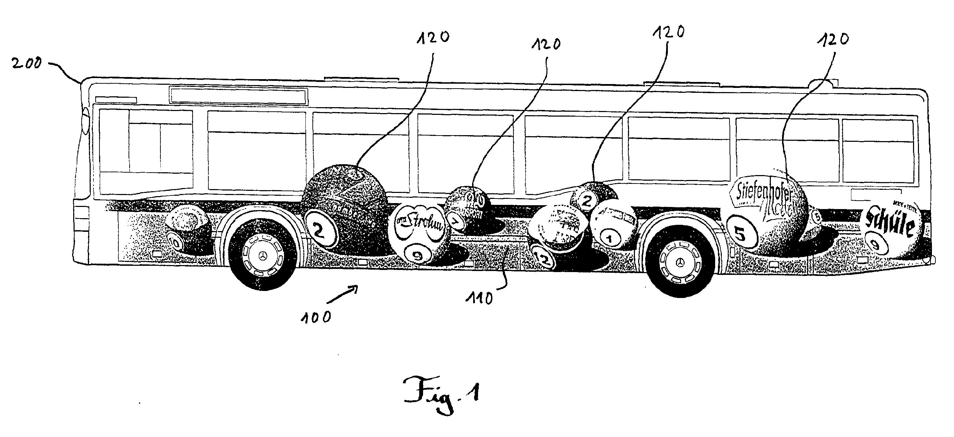

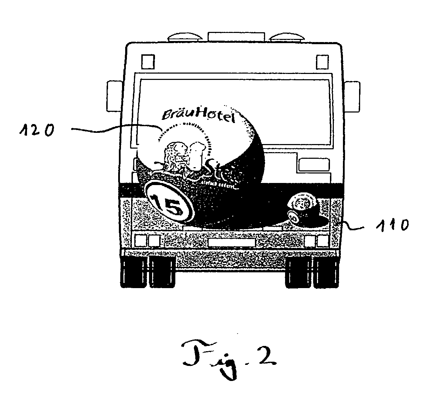

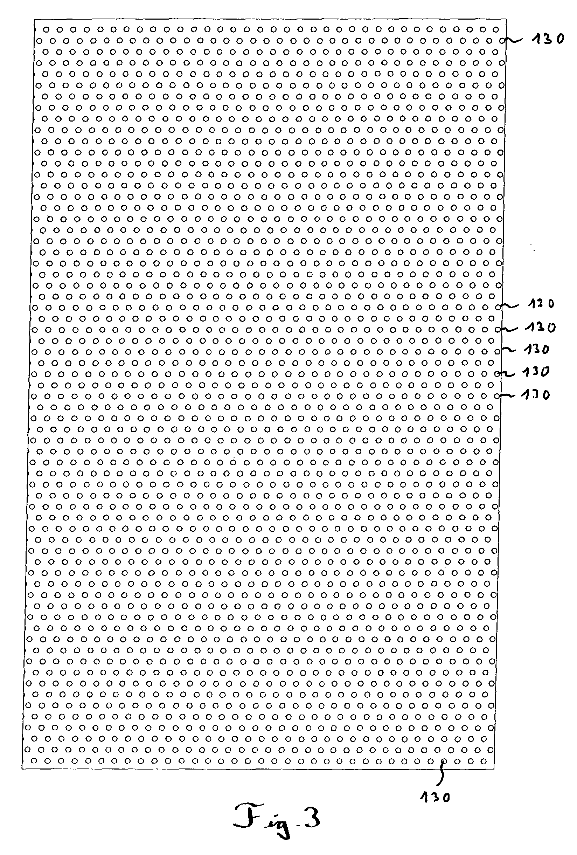

Die in den Figuren 1 und 2 dargestellte erfindungsgemäße Folien-Vorrichtung 100 weist eine Folie mit einseitiger Klebebeschichtung auf, wobei die Folie erfindungswesentlich in einen geschlossenen ersten Folienteil 110 sowie fünf weiteren Folienteile 120 unterteilt ist, die im Abstand angeordnete Aussparungen enthalten, die in Figur 3 dargestellt sind. Der erste Flächenteil 110 und die auf die Figuren 1 und 2 verteilten fünf weiteren Flächenteile 120 sind dabei integral miteinander verbunden. Die Folien-Vorrichtung 100 ist als Werbeträger auf einem Bus 200 angebracht, wobei die Folienteile 110 und 120 mittels der herkömmlichen und daher nicht dargestellten Klebebeschichtung von außen auf die Außenhaut des Busses geklebt sind.

Die Aussparungen 130 der fünf weiteren Flächenteile 120 sind jeweils kreisförmig ausgebildet, wobei die Aussparungen jeweils gleiche Durchmesser aufweisen und der Durchmesser einer Aussparungen auf etwa 1 mm bemessen ist. Die Aussparungen sind jeweils in einem Abstand von etwa 2,5 mm angeordnet. Die Klebebeschichtung der fünf weiteren Flächenteile 120 ist schwarz ausgebildet, um eine gute Sicht von einem relativ abgedunkelten dunklen Fahrzeuginnenraum des Busses 200 ins Freie zu bewirken.

Sowohl der erste Flächenteil 110 als auch die fünf weiteren Flächenteile 120 der Folie sind mittels Digitaldruck bedruckt, wobei der erste Flächenteil 110 auf der der Klebebeschichtung fernen Seite mit einem dreidimensionalen Motiv bedruckt ist und die fünf weiteren Flächenteile mit dem Bild eines dreidimensionalen Körpers, hier einem Ball, bedruckt sind, wobei der Ball teilweise in das dreidimensionale Motiv des ersten Flächenteils integriert ist. Die Folie ist auf der der Klebebeschichtung fernen Seite insgesamt von einem Laminat abgedeckt.

Das oben erläuterte Ausführungsbeispiel der Erfindung dient lediglich dem Zweck eines besseren Verständnisses der durch die Ansprüche definierten erfindungsgemäßen Lehre, die als solche durch das Ausführungsbeispiel nicht eingeschränkt ist.

## Patentansprüche

1. Folien-Vorrichtung mit einer Folie mit mindestens einer einseitigen Haftungsbeschichtung sowie Informations-trägerschicht, **dadurch gekennzeichnet, dass** die Folie einen geschlossenen ersten Folienteil sowie mindestens einen im Abstand angeordnete Aussparungen enthaltenden weiteren Folienteil aufweist.

2. Vorrichtung nach Anspruch 1, **dadurch gekennzeichnet, dass** der erste und der mindestens eine weitere Flächenteil integral miteinander verbunden sind.

3. Vorrichtung nach einem der Ansprüche 1 oder 2, **dadurch gekennzeichnet, dass** die Aussparungen des mindestens einen weiteren Flächenteils jeweils kreisförmig ausgebildet sind.

4. Vorrichtung nach Anspruch 3, **dadurch gekennzeichnet, dass** die Aussparungen des mindestens einen weiteren Flächenteils jeweils gleiche Durchmesser aufweisen.

5. Vorrichtung nach Anspruch 4, **dadurch gekennzeichnet, dass** der Durchmesser der Aussparungen auf etwa 1 mm bemessen ist.

6. Vorrichtung nach einem der Ansprüche 3 bis 5, **dadurch gekennzeichnet, dass** die Aussparungen jeweils in einem Abstand von etwa 2 mm bis 3 mm angeordnet sind.

7. Vorrichtung nach Anspruch 3, **dadurch gekennzeichnet, dass** die Aussparungen des mindestens einen weiteren Flächenteils paarweise unterschiedliche Durchmesser aufweisen.

8. Vorrichtung nach Anspruch 7, **dadurch gekennzeichnet**, die Aussparungen des mindestens einen weiteren Flächenteils in einer oder mehr Richtungen in immer enger werdendem Abstand angeordnet sind.

9. Vorrichtung nach einem der Ansprüche 7 oder 8, **dadurch gekennzeichnet**, die Aussparungen des mindestens einen weiteren Flächenteils in einer oder mehr Richtungen mit ansteigend größerem Durchmesser versehen sind.

10. Vorrichtung nach einem der Ansprüche 1 bis 9, **dadurch gekennzeichnet, dass** die Haftungsbeschichtung des mindestens einen weiteren Flächenteils schwarze Klebefolie ausgebildet ist.

11. Vorrichtung nach einem der Ansprüche 1 bis 9, **dadurch gekennzeichnet, dass** die Haftungsbeschichtung des mindestens einen weiteren Flächenteils als transparente Klebefolie ausgebildet ist und auf einem schwarzen Hintergrund aufgetragen ist.

12. Vorrichtung nach einem der Ansprüche 1 bis 11, **dadurch gekennzeichnet, dass** der erste Flächenteil und/oder der mindestens eine weitere Flächenteil der Folie mindestens teilweise als freistehende Fläche ausgebildet ist.

13. Vorrichtung nach einem der Ansprüche 1 bis 11, **dadurch gekennzeichnet, dass** die Informationsträgerschicht des ersten Flächenteils und/oder des mindestens einen weiteren Flächenteils der Folie mindestens teilweise mittels Digitaldruck bedruckt ist.

14. Vorrichtung nach einem der Ansprüche 1 bis 11, **dadurch gekennzeichnet, dass** die Informationsträgerschicht des ersten Flächenteils und/oder des mindestens einen weiteren Flächenteils der Folie mindestens teilweise mittels Siebdruck bedruckt ist.

15. Vorrichtung nach einem der vorhergehenden Ansprüche, **dadurch gekennzeichnet, dass** die Folie auf der der Haftungsbeschichtung fernen Seite von einem Laminat abgedeckt ist.

16. Vorrichtung nach einem der Ansprüche 1 bis 15, **dadurch gekennzeichnet, dass** die mindestens eine einseitige Haftungsbeschichtung als Klebeschicht ausgebildet ist.

17. Vorrichtung nach einem der Ansprüche 1 bis 15, **dadurch gekennzeichnet, dass** die mindestens eine einseitige Haftungsbeschichtung als Magnetträgerschicht ausgebildet ist.

18. Vorrichtung nach einem der Ansprüche 1 bis 15, **dadurch gekennzeichnet, dass** die mindestens eine einseitige Haftungsbeschichtung als Adhäsionsschicht ausgebildet ist.

19. Vorrichtung nach einem der vorhergehenden Ansprüche, **dadurch gekennzeichnet, dass** die Folie auf der der Haftungsbeschichtung fernen Seite mit einem dreidimensionalen Motiv bedruckt ist.

20. Vorrichtung nach einem der einem der vorhergehenden Ansprüche, **dadurch gekennzeichnet, dass** der mindestens eine weitere Flächenteil mit dem Bild eines dreidimensionalen Körpers bedruckt ist, der teilweise in das dreidimensionale Motiv des ersten Flächenteils integriert ist.

21. Vorrichtung nach Anspruch 20, **dadurch gekennzeichnet, dass** der Körper ein Ball ist.
